# EUROPEAN PATENT APPLICATION

(11) **EP 4 589 554 A1**
(43) Date of publication of application: **23.07.2025**
(21) Application number: 24305110.9
(22) Date of filing: 17.01.2024
(51) Int. Cl.: G06V 40/70

(54) **METHOD FOR REINFORCING SECURITY OF ENROLLMENT AND AUTHENTICATION IN MULTI-MODAL BIOMETRICS SYSTEMS**

(71) Applicant: THALES DIS FRANCE SAS, 92190 Meudon (FR)
(72) Inventor: HUGOT, Didier, 92350 Le Plessis Robinson (FR)
(74) Representative: Quintero Romero, Manuel

(57) **Abstract**

The invention provides a method for enrollment or authentication of an individual in a multi-modal biometrics system comprising at least one biometrical sensor, the multi-modal biometrics system being configured to acquire first biometrical data representative of a first biometrical feature and second biometrical data representative of a second biometrical feature, via the at least one biometrical sensor. The method comprises the following steps:
- obtaining (203) a first biological feature based on first data acquired by the biometrical sensor acquiring the first biometrical data;
- obtaining (204) a second biological feature based on second data acquired by the biometrical sensor acquiring the second biometrical data;
- determining (205) a similarity score of the first biological feature and the second biological feature;
- based on the similarity score, determining (206) whether the first biological feature and the second biological feature are from the same person or not.

## Description

### TECHNICAL FIELD

This invention is related to the field of biometrics systems, and more particularly, to multi-modal biometrics systems which perform enrollment/authentication to access to a service, resource, or place, based on several biometrical features of different biometrical types.

### BACKGROUND OF THE INVENTION

Biometrical features are used for enrollment and authentication of individuals, so as to provide a conditional access to a service, to a resource or to a place. This is the case for example at the border, when entering a country.

Different biometrical features are now broadly used, and a given biometrical feature may be chosen to be implemented in a biometrics system depending on the service/resource or access to a place to be granted by the biometrics system. For example, biometrical types of features may include palm print, fingerprint features such as minutiae, face, iris, voice, behavioral feature, palm veins, brain signal feature such as EEG (electroencephalogram).

A biometrical feature is any feature that enables to uniquely identify a person. Storing reference data representative of a biometrical feature of a person, enables to later authenticate the person by acquiring current data representative of the same biometrical feature, and comparing it with the reference data.

The biometrical data representative of a biometrical feature may be acquired by a biometrical sensor. Palm prints and fingerprints may be acquired using dedicated biometrical sensors, which are well known. Face and iris may be acquired using a camera, such as a Red-Green-Blue, RGB, camera for example. Alternatively, it can be acquired using an infrared camera, such as a near-infrared "NIR" camera, and/or a three-dimensional, 3D, camera, arranged to capture light or heat on a wide range of wavelengths.

To make biometrical authentications even stronger, some biometrics systems are based on several biometrical features of different biometrical types: for example, it may be based on verifying fingerprint of a person on the one hand, but also the face of the person on the other hand. Such biometrics systems are called multi-modal biometrics systems. They improve the complexity for an attacker to try to access a service or a place by faking biometrical data of the genuine user.

Enrollment and authentication in a multi-modal biometrics system may be done under the supervision of a human authority, such as a police officer at a border of a country. However, more and more multi-modal biometrics systems are now deployed in automated kiosks without such supervision.

Avoiding human supervision during enrollment and/or authentication on multi-modal biometrics systems brings more convenience and efficiency, when binding user data (such as identity data) with several different biometrical features. However, it raises additional security issues: one of these issues is to ensure, especially during enrollment, that the respective biometrical data representative of the different biometrical features acquired by the multi-modal biometrics system have been acquired on the same person. This is necessary to ensure proper biometrics binding between user data and the different biometrical features during enrollment.

For example, an individual enrolling to a service, such as a governmental service, in a multi-modal biometrics kiosk may be requested to present a combination of different biometrical features, such as "iris and face", or "face and fingerprint", or "face, fingerprint and palm prints", or another combination of different biometrical features. As the biometrical data are acquired without supervision in an automated kiosk, it is a challenge to ensure that the biometrical data representative of the different biometrical features is acquired on the same person. For example, a first person may try to enroll to a service from an automated multi-modal biometrics system, by enrolling his face (first type of biometrical feature) in front of a camera, while someone else, a second person, enrolls his fingerprint (second type second biometrical feature) on the fingerprint reader, while standing up behind the first person. The different biometrical features may be acquired in parallel or sequentially, one after the other.

There is therefore a need to improve the security associated with enrollment and authentication on an automated multi-modal biometrics system, in particular by ensuring that the biometrical features used for enrollment or authentication, are from the same person.

### SUMMARY OF THE INVENTION

The present invention provides a solution for the aforementioned problems by a method for method for enrollment or authentication of an individual in a multi-modal biometrics system according to claim 1, a computer program according to claim 13, a verification module according to claim 14, and a multi-modal biometrics system according to claim 15. In dependent claims, preferred embodiments of the invention are defined.

In a first inventive aspect, the invention provides a method for enrollment or authentication of an individual in a multi-modal biometrics system comprising at least one biometrical sensor, the multi-modal biometrics system being configured to acquire first biometrical data representative of a first biometrical feature and second biometrical data representative of a second biometrical feature, via the at least one biometrical sensor, wherein the first biometrical feature and the second biometrical feature are different, the method comprising the following steps:
- obtaining a first biological feature based on first data acquired by the biometrical sensor acquiring the first biometrical data;
- obtaining a second biological feature based on second data acquired by the biometrical sensor acquiring the second biometrical data;
- determining a similarity score of the first biological feature and the second biological feature;
- based on the similarity score, determining whether the first biological feature and the second biological feature are from the same person or not.

The invention allows to verify that the first biological feature, obtained from the same sensor as the first biometrical feature, is from the same person as the second biological feature, obtained from the same sensor as the second biometrical feature. It therefore allows to detect that the first biometrical feature and the second biometrical feature are also from the same person, which enables to reinforce the security of enrollment/authentication, in particular in automated kiosks without human supervision.

According to some embodiments, the method further comprises:
- acquiring first biometrical data via one of the at least one biometrical sensor;
- acquiring second biometrical data via one of the at least one biometrical sensor;
- processing the first biometrical data and the second biometrical data for enrollment or authentication of the individual, only if the first biological feature and the second biological feature are determined as being from the same person.

Therefore, if the first and second biological features are determined as being from different persons, the authentication/enrollment process is prevented, which reinforces the security in automated kiosks without human supervision.

In complement, the first data may be the acquired first biometrical data and/or the second data may be the acquired second biometrical data.

Therefore, the biometrical features can be derived from the biometrical data. The acquisition of biometrical data therefore allows to perform both the verification process but also the enrollment/authentication process.

According to some embodiments, the first biological feature and the second biological feature may be determined as being from the same person if the similarity score is above a predefined threshold.

Predefining a threshold allows to reinforce the security of the enrollment/authentication, while taking into account some intrinsic lack of accuracy associated with the determination of the first biological feature, second biological feature and/or similarity score.

According to some embodiments, the multi-modal biometrics system may comprise a first biometrical sensor arranged to acquire the first biometrical data and a second biometrical sensor arranged to acquire the second biometrical data. The first biological feature may be obtained based on first data acquired by the first biometrical sensor and the second biological feature may be obtained based on second data acquired by the second biometrical sensor.

The invention therefore allows to detect attacks in which a first person attempts to enroll/authenticate on the first biometrical sensor and a second person attempts to enroll/authenticate on the second biometrical sensor.

According to a first embodiment, the first biological feature and the second biological feature may be of a same biological type, and the similarity score may be based on a comparison between the first biological feature and the second biological feature.

The first embodiment allows to determine an accurate similarity score based on a comparison between variables that can be directly compared.

In complement in the first embodiment, the first biological feature and the second biological feature may be of a same physiological type and may be one among the following: a body temperature or body temperature variation; a body movement feature; skin color; electrical activity; skin moisture; respiration rate.

These biometrical features can be derived from data acquired by a biometrical sensor, and are representative of a current physiological state of the person attempting to enroll/authenticate on a biometrical sensor.

Alternatively in the first embodiment, the first biological feature may be a first estimation of an age or gender determined based on the first biometrical data and the second biological feature may be a second estimation of an age or gender determined based on the second biometrical data.

These biometrical features can be derived from data acquired by a biometrical sensor, and allows to easily detect a spoofing attack of two persons attempting to enroll/authenticate their respective biometrical features, but who have different genders or ages.

According to a second embodiment, the first biological feature may be of a first biological type and the second biological feature may be of a second biological type, the first biological type and the second biological type being different, and the similarity score may be obtained based on a classification model arranged to receive as input an input first biological feature of the first biological type and an input second biological feature of the second biological type, and arranged to estimate the similarity score based on correlations between the input first biological feature and the input second biological feature.

The second embodiment allows to determine an accurate similarity score, even when the first biological feature and the second biological feature cannot be directly compared.

In complement in the second embodiment, the classification model may identify one or several clusters defining pairs of first biological feature of the first biological type and second biological feature of the second biological type, the classification model may be obtained by unsupervised learning, by unsupervised learning or by semi-supervised learning based on a training dataset comprising training pairs, each training pair comprising a training first biological feature of the first biological type and a training second biological feature of the second biological type, and the similarity score may be determined based on a distance between:
- a pair formed by the obtained first biological feature and the obtained second biological feature; and
- the one or several clusters of the classification model.

This allows a high accuracy in the determination of the similarity score, in particular if the training dataset comprises a high amount of training pairs. This also allows continuous training of the classification model, for example in a centralized way by collecting pairs of first and second biological features from different multi-modal biometrics systems. Alternatively, the classification model may be continuously trained in a federated way, with continuous learning results obtained at the edge close to the sensors, at different sites, and the results being consolidated to train a global classification model.

According to some embodiments, the first data may be acquired by the multi-modal biometrics system during a first period and the second data is acquired during a second period, and the first period and the second period may be at least overlapping so that the first data and the second data are obtained in a synchronous way.

This allows to compare the first and second biological features in real time, therefore improving the accuracy and speed of the determination of the similarity score.

Alternatively, the first data may be acquired by the multi-modal biometrics system during a first period and the second data is acquired during a second period, and the first period and the second period may be distinct, so that the first data and the second data are obtained in an asynchronous way.

This allows to reinforce the security of the enrollment/authentication process based on sequential acquisitions of first and second biometrical features: the first biological feature can be based on first data acquired in the first period, during which the first biometrical data can also be acquired, and then the second biological feature can be based on second data acquired in the second period, during which the second biometrical data can also be acquired.

In a second aspect, the invention proposes a computer program comprising instructions arranged for implementing the method according to the first aspect of the invention, when said instructions are executed by a processor.

In a third aspect, the invention concerns a verification module of a multi-modal biometrics system comprising at least one biometrical sensor configured to acquire first biometrical data representative of a first biometrical feature and second biometrical data representative of a second biometrical feature, wherein the first biometrical feature and the second biometrical feature are different, the verification module comprising a processor configured for:
- obtaining a first biological feature based on first data acquired by the biometrical sensor acquiring the first biometrical data;
- obtaining a second biological feature based on second data acquired by the biometrical sensor acquiring the second biometrical data;
- determining a similarity score of the first biological feature and the second biological feature;
- based on the similarity score, determining whether the first biological feature and the second biological feature are from the same person or not.

In a fourth aspect, the invention concerns a multi-modal biometrics system comprising a verification module according to the third aspect of the invention and at least one biometrical sensor. The multi-modal biometrics system is configured to acquire first biometrical data representative of a first biometrical feature and second biometrical data representative of a second biometrical feature, via the at least one biometrical sensor, the first biometrical feature and the second biometrical feature being different.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows an automated multi-modal biometrics system according to some embodiments of the invention.
- Figure 2: This figure a method for enrollment/authentication of an individual, using a multi-modal biometrics system, according to some embodiments of the invention.
- Figure 3: This figure depicts shows a simplified classification model implemented in a multi-modal biometrics system according to a second embodiment of the invention.
- Figure 4: This figure depicts shows a structure of a verification device in an automated multi-modal biometrics system according to some embodiments of the invention.

### DETAILED DESCRIPTION OF THE INVENTION

As it will be appreciated by one skilled in the art, aspects of the present invention may be embodied as a method for enrollment or authentication of an individual, a computer program, a verification module 103, or a multi-modal biometrics system 100.

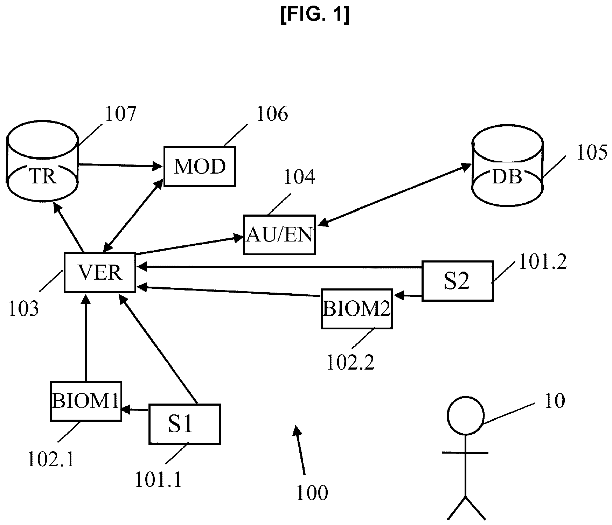

Figure 1 shows an automated multi-modal biometrics system 100 according to some embodiments of the invention.

The system 100 is dedicated to a service, which can be to provide an access to a resource, service or to a place (a country for example). To do so, a preliminary enrollment procedure is required, for acquiring reference biometrical features of an individual. At a later stage, an authentication procedure can be implemented by comparing biometrical features derived from currently acquired biometrical data, with stored reference biometrical features.

The system 100 may be implemented in an automated kiosk, in an airport for example, or in a user device, such as a Smartphone for example.

The system 100 described in what follows can be used for enrollment and/or for authentication, i.e. for determining reference biometrical features and/or for acquiring current biometrical data to determine current biometrical features to be compared to stored reference biometrical features.

As previously explained, a multi-model system is configured to process biometrical data representative of several biometric features that are different (that are of different biometrical types and cannot be compared together), i.e. at least first biometrical data representative of a first biometrical feature and second biometrical data representative of a second biometrical feature, the first and second biometrical features being different (of different biometrical types).

A biometrical feature encompasses any feature identifying a person in a unique way. This means that the biometrical feature of a given biometrical type of a person is different from the biometrical feature of the same given biometrical type of another person. As previously explained, the biometrical feature may be a palm print, a fingerprint, a face feature, an iris, a voice feature, a behavioral feature, a palm veins, a brain signal feature such as EEG (electroencephalogram).

The multi-modal biometrics features in configured to perform enrollment or authentication based on a combination of N different biometrical features, N being an integer equal to, or greater than, 2. The invention aims at ensuring that the N different biometrical features are of the same person.

In what follows, it is considered, for illustrative purposes and for simplifying the understanding of the invention, that the multi-modal biometrics system 100 is configured to perform enrollment or authentication based on a combination of two different biometrical features (two biometrical features of two different biometrical types), including a first biometrical feature and a second biometrical feature, being different from the first biometrical feature. However, it is to be noted that the invention also applies to multi-modal biometrics system based on strictly more than two different biometrical features.

To acquire first biometrical data representative of the first biometrical feature and second biometrical data representative of the second biometrical feature, the multi-modal biometrics system 100 comprises at least one biometrical sensor. On figure 1, it is shown, for illustrative purposes, that the multi-modal biometrics system 100 comprises a first biometrical sensor 101.1 and a second biometrical sensor 101.2.

The first biometrical sensor 101.1 is configured to obtain first biometrical data that can be processed by a first biometrical module 102.1. For example, the first biometrical sensor 101.1 may be a camera arranged for acquiring a picture of a person, including the face of the person (first biometrical data), and the first biometrical module 102.1 is arranged to crop the picture on the face of the person and to identify a facial feature in the cropped picture (first biometrical feature).

The second biometrical sensor 101.2 is configured to obtain second biometrical data that can be processed by a second biometrical module 102.2. For example, the second biometrical sensor 101.2 may be a fingerprint reader arranged for obtaining an image of a fingerprint (first biometrical data) and the second biometrical module 102.2 is arranged to identify minutiae (first biometrical feature) in the image of the fingerprint. The first biometrical module 102.1 can be part of the first sensor 101.1 and the second biometrical module 102.2 can be part of the second sensor 101.2. Alternatively, the first biometrical module 102.1 and the second biometrical module 102.2 are integrated in the verification module 103 described in what follows.

However, it is to be noted that a single biometrical sensor may be configured for acquiring both the first biometrical data and the second biometrical data. For example, the unique biometrical sensor may be a camera arranged for acquiring a picture of the iris, as first biometrical data, of a person and also arranged to acquire a picture of a face, as second biometrical data (which can be obtained via a single acquisition, or via sequential acquisitions).

The multi-modal biometrics system 100 further comprises a verification module 103 that is arranged for determining a similarity score based on a first biological feature derived from first data acquired by the first biometrical sensor 101.1 and a second biological feature derived from second data acquired by the second biometrical sensor 101.2. Based on the similarity score, the verification module 103 can determine whether the first biological feature and the second biological feature are of the same person or not.

A biological feature is an attribute that describes an individual or the physiological functioning of its organism, but without uniquely identifying the individual. It is therefore distinct from any biometrical feature. Biological features therefore encompass:
- physiological features on the one side, such as body temperature, or the temperature of a given part of the body, heart pulses, body movements or micro-movements, electrical activity of the body, skin moisture, skin color, respiration rate, etc.; and
- age, gender, ethnicity.

Thus, some biological features vary over time, more or less quickly (body temperature continuously varies during a single day, whereas age varies more slowly) or may remain the same but without uniquely identifying an individual (gender, ethnicity).

The first biological feature can be obtained:
- by deriving the first biological feature from the first biometrical data acquired by the first biometrical sensor 101.1. In that case, the verification module 103 may receive the first biological feature from the first biometrical module 102.1, which is arranged to derive it from the first biometrical data, or the verification module 103 may receive the first biometrical data and may derive the first biological feature from the received first biometrical data; or
- based on first biological data (distinct from the first biometrical data) received from the first biometrical sensor 101.1 and transmitted to the verification module 103. In that case, the first biometrical sensor 101.1 may acquire the first biological feature independently from the first biometrical data.

The second biological feature can be obtained:
- by deriving the second biological feature from the second biometrical data acquired by the second biometrical sensor 101.2. In that case, the verifying module 103 may receive the second biological feature from the second biometrical module 102.2, which is arranged to derive it from the second biometrical data, or the verifying module 103 may receive the second biometrical data and may derive the second biological feature from the received second biometrical data;
- based on second biological data (distinct from the second biometrical data) received from the second biometrical sensor 101.2.

Acquiring the first and second biological features, and comparing them to obtain a similarity score, enables to detect attacks where two attackers, a first person and a second person, attempt to enroll/authenticate a first biometrical feature of the first person on the first biometrical sensor 101.1 and a second biometrical feature of the second person on the second biometrical sensor 101.2. Indeed, in that case, a first biological feature obtained from the first biometrical sensor 101.1 on the first person may not be consistent with a second biological feature obtained from the second biometrical sensor 101.2. This discrepancy is advantageously detected based on the similarity score, and the attack can be detected.

According to a first embodiment, the first and second biological features are of the same type, which means that they can be directly compared.

Examples of the first embodiment are given in what follows, for illustrative purposes:
- according to a first example, the first biological feature is a first age (or a first estimation of age) and the second biological feature is a second age (or a second estimation of age), that can be compared together. If the age difference between the first age and the second age (which can be expressed by a similarity score) is above a predefined threshold, the verification module 103 may detect that the person attempting to enroll/authenticate the first biometrical feature is different from the person attempting to enroll/authenticate the second biometrical feature. Else, the verification module 103 detects that the same person attempts to enroll/authenticate the first biometrical feature and the second biometrical feature;
- according to a second example, the first biological feature is a first gender, and the second biological feature is a second gender. If the first and second genders are different (similarity score of 0 for example), the verification module 103 may detect that the person attempting to enroll/authenticate the first biometrical feature is different from the person attempting to enroll/authenticate the second biometrical feature. Else, if the first gender and the second gender are the same (similarity score of 1 for example), the verification module 103 detects that the same person attempts to enroll/authenticate the first biometrical feature and the second biometrical feature;
- according to a third example, the first biological feature is a first ethnicity and the second biological feature is a second ethnicity. If the first and second ethnicities are different (similarity score of 0 for example), the verification module 103 may detect that the person attempting to enroll/authenticate the first biometrical feature is different from the person attempting to enroll/authenticate the second biometrical feature. Else, if the first ethnicity and the second ethnicity are the same (similarity score of 1 for example), the verification module 103 detects that the same person attempts to enroll/authenticate the first biometrical feature and the second biometrical feature;
- according to a fourth example, the first biological feature is a first heart pulse signal and the second biological feature is a second heart pulse signal. A heart pulse signal may be any characteristic or combination of characteristics derives from an electrocardiogram ECG signal, such as the heart rate, pulse forms and interval, or other characteristics. The verification module 103 may compare the first heart pulse signal and the second heart pulse signal to determine the similarity score. No restriction is attached to the comparison of the two heart pulses signals. Also, no restriction is attached to the acquisition of the first heart pulse signal and of the second heart pulse signal, which can be synchronously acquired by the first biometrical sensor 101.1 and by the second biometrical sensor 101.2, in which case the comparison can be performed in real time. Alternatively, the acquisitions of the first heart pulse signal and of the second heart pulse signal may be asynchronous, for example sequential. If the similarity score is below the predefined threshold, the verification module 103 may detect that the person attempting to enroll/authenticate the first biometrical feature is different from the person attempting to enroll/authenticate the second biometrical feature. Else, the verification module 103 detects that the same person attempts to enroll/authenticate the first biometrical feature and the second biometrical feature;
- according to a fifth example, the first biological feature is a first body temperature, or a first body temperature variation, and the second biological feature is a second body temperature, or a second body temperature variation. The verification module 103 may determine the difference between the first and second body temperatures (which can be expressed by a similarity score), or between the first and second body temperature variations, and compare the difference with a predefined threshold. The predefined threshold may be determined based on a temperature offset, for example when the first body temperature is representative of the temperature of a body part (the hand for example) whereas the second body temperature is representative of the temperature of another body part (the face for example). Indeed, the temperature of the face of a person may be different from the temperature of the hand of this same person. If the determined difference is above the predefined threshold (or if the similarity score is below a corresponding threshold), the verification module 103 may detect that the person attempting to enroll/authenticate the first biometrical feature is different from the person attempting to enroll/authenticate the second biometrical feature. Else, the verification module 103 detects that the same person attempts to enroll/authenticate the first biometrical feature and the second biometrical feature;
- according to a sixth example, the first biological feature is a first body movement, such as a first body micro-movement, or a first series of body movements, and the second biological feature is a second body movement, such as a second micro-movement, or a second series of body movements. The verification module 103 may compare the first body movement, or first series, and the second body movement, or second series, to determine the similarity score. No restriction is attached to the comparison of the two body movements or series of body movements. Also, no restriction is attached to the acquisition of the first body movement or series of body movements, and of the second body movement or series of body movements, which can be synchronously acquired by the first biometrical sensor 101.1 and by the second biometrical sensor 101.2, in which case the comparison can be performed in real time. Alternatively, the acquisitions of the first body movement or series of body movements, and of the second body movement or second series of body movements, may be asynchronous, for example sequential. If the similarity score is below the predefined threshold, the verification module 103 may detect that the person attempting to enroll/authenticate the first biometrical feature is different from the person attempting to enroll/authenticate the second biometrical feature. Else, the verification module 103 detects that the same person attempts to enroll/authenticate the first biometrical feature and the second biometrical feature;

- according to a seventh example, the first biological feature is a first skin color and the second biological feature is a second skin color. The verification module 103 may determine a similarity score by comparing the first skin color and the second skin color, then compare the similarity score with a predefined threshold. If the similarity score is below the predefined threshold, then the verification module 103 detects that the person attempting to enroll/authenticate the first biometrical feature is different from the person attempting to enroll/authenticate the second biometrical feature. Else, the verification module 103 detects that the same person attempts to enroll/authenticate the first biometrical feature and the second biometrical feature;
- according to an eighth example, the first biological feature is a first electrical body activity, and the second biological feature is a second electrical body activity. The verification module 103 may determine a similarity score by comparing the first electrical body activity and the second electrical body activity, then compare the similarity score with a predefined threshold. No restriction is attached to the comparison of the two electrical body activities. Also, no restriction is attached to the acquisition of the first electrical body activity and of the second electrical body activity, which can be synchronously acquired by the first biometrical sensor 101.1 and by the second biometrical sensor 101.2, in which case the comparison can be performed in real time. Alternatively, the acquisitions of the first electrical body activity and of the second electrical body activity may be asynchronous, for example sequential. If the similarity score is below the predefined threshold, then the verification module 103 detects that the person attempting to enroll/authenticate the first biometrical feature is different from the person attempting to enroll/authenticate the second biometrical feature. Else, the verification module 103 detects that the same person attempts to enroll/authenticate the first biometrical feature and the second biometrical feature;
- according to a ninth example, the first biological feature is a first skin moisture, and the second biological feature is a second skin moisture. The verification module 103 may determine a similarity score by comparing the first skin moisture and the second skin moisture, then compare the similarity score with a predefined threshold. No restriction is attached to the comparison of the two skin moistures. If the similarity score is below the predefined threshold, then the verification module 103 detects that the person attempting to enroll/authenticate the first biometrical feature is different from the person attempting to enroll/authenticate the second biometrical feature. Else, the verification module 103 detects that the same person attempts to enroll/authenticate the first biometrical feature and the second biometrical feature;
- according to a tenth example, the first biological feature is a first respiration rate and the second biological feature is a second respiration rate. The verification module 103 may determine a similarity score by comparing the first respiration rate activity and the second respiration rate, then compare the similarity score with a predefined threshold. No restriction is attached to the comparison of the two-respiration rate. If the similarity score is below the predefined threshold, then the verification module 103 detects that the person attempting to enroll/authenticate the first biometrical feature is different from the person attempting to enroll/authenticate the second biometrical feature. Else, the verification module 103 detects that the same person attempts to enroll/authenticate the first biometrical feature and the second biometrical feature.

The fourth to tenth examples are based on biological features that are physiological features.

More complex similarity scores may be determined within the scope of these example, for example when the first biological feature is determined with a first certainty score and the second biological feature is determined with a second certainty score.

Also, the invention applies to examples of first and second biological features others than the ten examples given above for illustrative purposes.

No restriction is attached to the way the above listed biological features may be obtained based on first data acquired by the first biometrical sensor 101.1 and based on second data acquired by the second biometrical sensor 101.2.

The first data may be:
- the first biometrical data (the data used to determine the first biometrical feature); or
- first biological data, which is distinct from the first biometrical data, and acquired by the first biometrical sensor 101.1 in addition to the first biometrical data.

The second data may be :
- the second biometrical data (the data used to determine the second biometrical feature); or
- second biological data, which is distinct from the second biometrical data, and acquired by the second biometrical sensor 101.2 in addition to the second biometrical data.

In the first example, the first age may be estimated based on first data acquired by the first biometrical sensor 101.1 being a palm print reader (therefore arranged to acquire the first biometrical data such as a palm print), and the second age may be estimated based on second data acquired by the second biometrical sensor 101.2 being a camera (therefore arranged to acquire the second biometrical data being the face or the iris of a person). It is indeed possible to estimate the age of a person based on a picture, or several pictures, of the face of a person, using classification models that are well known. It is also possible to automatically estimate the age of a person based on a picture of an iris or based on a palm print, using more advanced classification models. No restriction is attached to the models that are used for predicting/estimating the age based on data acquired by biometrical sensors, such as a face picture, an iris picture, or a palm print.

Alternatively in the first example, the first age may be estimated based on a heart rate or pace derived from first data acquired by the first biometrical sensor 101.1 (the heart rate being obtained by photoplethysmography, PPG, from first data of a fingerprint reader or using Eulerian Video Magnification on first data of a camera capturing the face), and the second age may be estimated based on second data acquired by the second biometrical sensor 101.2 being a camera (therefore arranged to acquire the second biometrical data being the face of the iris of a person). It is indeed possible to automatically estimate the age of a person-based heart rate or pace, using more advanced classification models. No restriction is attached to the models that are used for predicting/estimating the age based on the heart rate or pace.

In the second example, the first gender is estimated based on first data acquired by the first biometrical sensor 101.1 being a fingerprint reader (therefore arranged to acquire first biometrical data being fingerprints), and the second gender is estimated based on second data acquired by the second biometrical sensor 101.2 being a camera (therefore arranged to acquire second biometrical data being the face or the iris of a person). It is indeed possible to automatically estimate the gender of a person based on a picture, or several pictures, of the face of a person, using classification models that are well known. It is also possible to estimate the gender of a person based on a picture of an iris or based on a palm print, using more advanced classification models. No restriction is attached to the models that are used for predicting/estimating the gender based on data acquired by biometrical sensors such as a face picture, an iris picture or a palm print.

In the fourth example, the first heart pulse signal may be obtained based on first data acquired by the first biometrical sensor 101.1 being a camera (therefore arranged to acquire first biometrical data such as the face or iris of a person), by analyzing the images acquired by the camera using Eulerian Video Magnification for example, and the second heart pulse signal may be determined based on second data acquired by the second biometrical sensor 101.2 being a palm print reader or a fingerprint reader, using PPG.

In the fifth example, the first body temperature or the first body temperature variation can be obtained from first data acquired by the first biometrical sensor 101.1 being a thermal or RGB camera (therefore arranged to acquire first biometrical data such as the face or iris of a person), by analyzing the image or images acquired by the camera, and the second body temperature, or the second body temperature variation, can be obtained based on second biological data obtained by infrared sensors of a palm print reader (which is the second biometrical sensor 101.2), in addition to the palm print image (second biometrical data).

In the sixth example, the first body movement, or first body micro-movement, can be obtained based on first data acquired by the first biometrical sensor 101.1 being a camera (arranged to acquire first biometrical data such as the face or iris of a person), by analyzing a video showing movements of the face or of the iris acquired by the camera, or by an accelerometer embedded in a sensor arranged to acquire biometrical data in parallel, and the second body movement, or second body micro-movement, can be obtained based on second data acquired by the second biometrical sensor 101.2 being a fingerprint reader (arranged to acquire second biometrical data being a fingerprint) in particular by computing the second body movement based on different consecutive acquisitions of the fingerprint.

The examples given above describe embodiments in which the multi-modal biometrics system 100 comprises the first biometrical sensor 101.1 and the second biometrical sensor 101.2.

As explained above, the multi-modal biometrics system 100 may comprise a unique biometrical sensor, for example a camera arranged for acquiring a picture of a face (first biometrical data) and for acquiring a picture of an iris (second biometrical data). In that case, the first and second biological features may be derived from the first and second biometrical data respectively and may be:
- a micro-movement of the iris and a micro-movement of the face, determined respectively based on the face picture (first biometrical data) and the iris picture (second biometrical data) acquired by the unique biometrical sensor being a camera. Alternatively, one of the micro-movements is detected on any part of the body, including a part that is different from the part having the micro-movement: for example, a micro-movement on the face may be detected on the hand;
- in case of asynchronous acquisition of the first biometrical data being the face (first picture) then of the second biometrical data being the iris (second picture), the skin color in the first picture and the skin color in the second picture;
- in case of asynchronous acquisitions of the first biometrical data being the face picture then of the second biometrical data being the iris picture, a first heart rate during (or right before or after) acquisition of a picture of the face and a second heart rate during (or right before or after) acquisition of a picture of the iris.

Other examples may be envisaged within the scope of the first embodiment according to the invention.

According to a second embodiment of the invention, the first biological feature is of a first biological type and the second biological feature is of a second biological type that is different from the first biological type. Therefore, in the second embodiment, the first biological feature and the second biological feature cannot be directly compared, and the verification module 103 cannot obtain the similarity score based on a direct comparison.

However, according to the second embodiment, the verification module 103 may be arranged to determine whether the first biological feature is consistent/compatible with the second biological feature, based on a similarity score obtained from correlations between the first biological feature and the second biological feature. Correlations between the first biological feature and the second biological feature may be evaluated from a classification model, which may be trained by machine learning on training pairs, each training pair comprising a training first biological feature and a training second biological feature both determined on the same person. The training pairs may be stored in a training database 107 shown on figure 1, that can be remote from the multi-modal biometrics system 100. As explained in what follows the training database 107 can be accessed by the verification module 103.

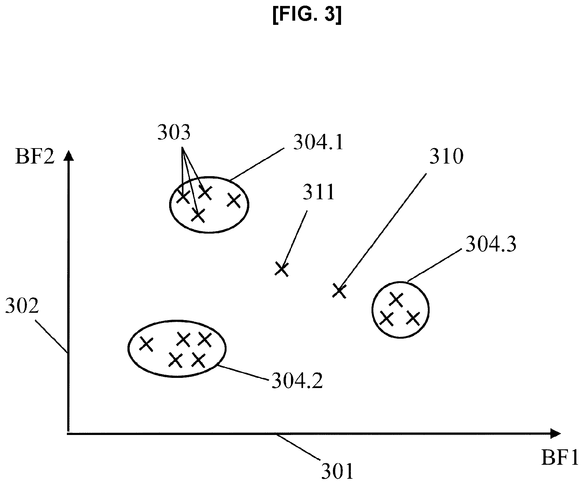

The classification model may be obtained by clustering of the training pairs, by unsupervised learning for example, or alternatively by supervised learning or semi-supervised learning. A simplified example of such a classification model obtained by clustering is shown on Figure 3 that is described in what follows.

The classification model can be trained in a preliminary phase, before being implemented in the verification module 103 (stored in an internal memory of the verification module 103 for example) or stored in a remote server 106 that can be accessed by the verification module 103, via an IP network for example. Also, according to some embodiments, the classification model can be continuously trained, and regularly updated in the verification module 103.

For example, correlations between the following biological features may be synthesized in the classification model:
- heart rate (first biological feature) measured from face video capture by a camera (first biometrical sensor 101.1) and a fingerprint moisture (second biological feature) determined based on biological data related to moisture measured by a fingerprint reader (second biometrical sensor 101.2);
- shape of fingerprints (first biological feature) determined based on first data acquired by a fingerprint sensor (first biometrical sensor 101.1) and the iris color and/or pattern (second biological feature) determined based on second data acquired by a camera (second biometrical sensor 101.2).

According to the first embodiment and the second embodiment described above, the verification device 103 is arranged to determine, based on the similarity score, whether the first biological feature and the second biological feature are from the same person or not. The verification device may communicate with an authentication/enrollment device 104 of the multi-modal biometrics system 100.

The device 104 may be arranged to authenticate/enroll the first and second biometrical features of the person 10, depending on whether the verification device 103 determines that the first biological feature and the second biological feature are from the same person or not.

If yes, i.e. if the verification device 103 determines that the first biological feature and the second biological feature are from the same person, the device 104 may authenticate/enroll the first biological feature and the second biological feature.

Enrollment by the device 104 may comprise storage of the obtained first biometrical feature and of the obtained second biometrical feature, as reference first and second biometrical features in association with identity information of the person 10, in a database 105, for further authentication at a later stage. The database 105 can be a remote database accessed via an IP network for example.

Authentication by the device 104 may comprise :
- obtaining identity information from the person 10;
- retrieving a reference first biometrical feature and retrieving a reference second biometrical feature, both associated with the identified person in the database 105;
- comparing the obtained first biometrical feature with the reference first biometrical feature and comparing the obtained second biometrical feature with the reference second biometrical feature;
- authenticating the person 10 or not based on the results of both comparisons.

However, if the verification device 103 determines that the first biological feature and the second biological feature are not from the same person, the device 104 may reject the authentication or refuse to enroll the first and second biometrical features.

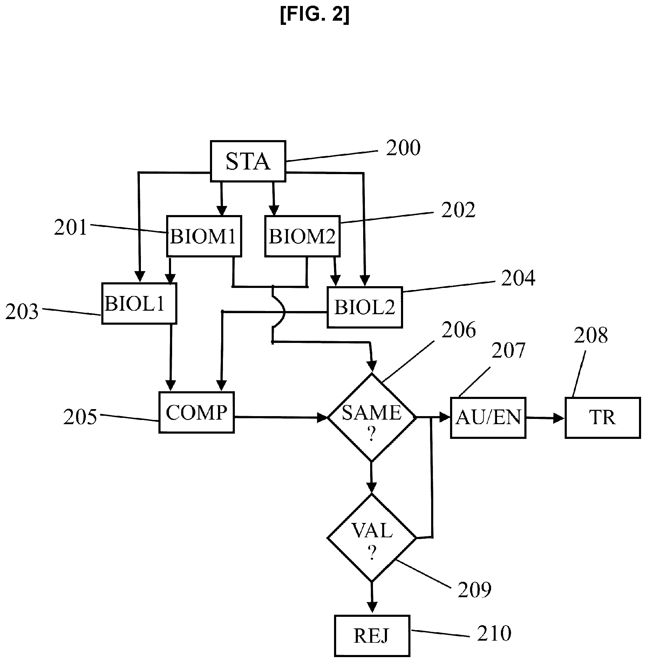

Figure 2 shows the steps of a method for enrollment/authentication of an individual in a multi-modal biometrics system 100 according to some embodiments of the invention.

At step 200, the authentication/enrollment process is initiated. No restriction is attached to the condition triggering the authentication/enrollment process, which can be the reception of a user input from the individual 10 attempting to enroll/authenticate in the multi-modal biometrics system 100, such as an automated kiosk without human supervision. The user input may for example be received by a user interface of the verification device 103 or of the authentication/enrollment device 104.

At step 201, the multi-modal biometrics system 100 obtains a first biometrical feature based on first biometrical data acquired by the at least one sensor of the system 100, for example via the first biometrical sensor 101.1 shown on figure 1. The first biometrical feature can for example be determined by the first biometrical module 102.1 described previously.

At step 202, which can be in parallel to step 201, or which can be sequentially performed before or after step 201, the multi-modal biometrics system 100 obtains a second biometrical feature based on second biometrical data acquired by the at least one sensor of the system 100, for example via the second biometrical sensor 101.2 shown on figure 2. The second biometrical feature can for example be determined by the second biometrical module 102.2 described previously. As explained, the first biometrical feature and the second biometrical feature to be enrolled/authenticated, are different according to the invention (they are of different biometrical types).

At step 203, the multi-modal biometrics system 100 determines a first biological feature based on first data acquired by the at least one biometrical sensor. In the example of figure 1, the first data is obtained by the first biometrical sensor 101.1. The first data can be:
- the first biometrical data representative of the first biometrical feature obtained at step 201. In that case, the first biological feature can be determined by the first biometrical module 102.1 and transmitted to the verification module 103; or
- first biological data obtained by the first biometrical sensor 101.1, in addition to the first biometrical data representative of the first biometrical feature. In that case, the first biological data can be preferably acquired during acquisition of the first biometrical data, or shortly before or after the acquisition of the first biometrical data (for example less than one minute before or after the acquisition of the first biometrical data).

At step 204, the multi-modal biometrics system 100 determines a second biological feature based on second data acquired by the at least one biometrical sensor, and being different from the first data. In the example of figure 1, the second data is obtained by the second biometrical sensor 101.2. The second data can be:
- the second biometrical data representative of the second biometrical feature obtained at step 202. In that case, the second biological feature can be determined by the second biometrical module 102.2 and transmitted to the verification module 103; or
- second biological data obtained by the second biometrical sensor 101.1, in addition to the second biometrical data representative of the second biometrical feature. In that case, the second biological data can be preferably acquired during acquisition of the second biometrical data, or shortly before or after the acquisition of the second biometrical data (for example less than one or two minutes before or after the acquisition of the first biometrical data).

Therefore, step 201 and step 203 are performed in a common first period, which can be less than one or two minutes, and steps 202 and 204 are performed in a common second period, which can also be less than one or two minutes. The first period and the second period may be in parallel (one of the periods being included in the other, or the periods being partially overlapping), or may be sequential. In the embodiments described above, in which the first biological feature and the second biological feature are determined in a synchronous way, the first and second periods are performed in parallel.

At step 205, the verification module 103 determines a similarity score between the first biological feature obtained at step 203 and the second biological feature obtained at step 204, as previously explained.

At step 206, the verification module 103 determines, based on the similarity score, if the first biological feature and the second biological feature are (or may possibly be) from the same person or not. Step 206 may consist in comparing the similarity score with a predefined threshold.

If the verification module 103 determines at step 206 that the first biological feature and the second biological feature are from the same person, then the verification module 103 can validate the enrollment process or authentication process with the module 104, at step 207. The module 104 can then perform enrollment/authentication of the individual 10 at step 207, based on the first and second biometrical features determined at steps 201 and 202. Step 207 can therefore comprise:
- storage of the obtained first biometrical feature and of the obtained second biometrical feature as respective reference first biometrical feature and reference second biometrical feature in the database 105, in association with identity information of the individual 10 (in case of enrollment); or
- comparing the obtained first biometrical feature with the reference first biometrical feature of the individual 10 stored in the database 105 and comparing the obtained second biometrical feature with the reference first biometrical feature of the individual 10 stored in the database 105 (in case of authentication).

In the second embodiment described above, the method may further comprise a step 208 of transmitting, by the verification module 103, the obtained first biological feature and the second biological feature to the training database 107. This allows a continuous learning for updating of the classification model stored in the server 106.

If the verification module 103 determines at step 206 that the first biological feature and the second biological feature are not from the same person, then method may further comprise a step 210 of cancellation of the authentication/enrollment process, and the module 104 does not perform enrollment/authentication of the individual 10 based on the first biometrical feature and the second biometrical feature obtained at steps 201 and 202.

Optionally, the method may further comprise, after step 206 and if the verification module 103 determines at step 206 that the first biological feature and the second biological feature are not from the same person, a step 209 of issuing an alert to a human supervisor. The human supervisor can then check the individual in the kiosk and decide to manually allow authentication/enrollment on the device 104 or verification device 103. If the enrollment/authentication is manually validated, step 207, and optionally step 208, can be carried out. If the enrollment/authentication is manually refused, step 210 is carried out. A human supervisor can therefore be alerted only in case of a doubt about a single person being attempting to enroll/authenticate on the automated multi-modal biometrics system 100.

Figure 3 shows a simplified classification model 300 according to the second embodiment of the invention.

As previously explained, in the second embodiment, the verification module 103 determines the similarity score between first and second biological features of different biological types, based on correlations that are represented by a classification model, such as the classification model 300.

The classification model 300 is simplified as it represents each of the first and second biological features on a respective axis, the first biological feature being represented by a single value on a first axis 301 and the second biological feature being represented by a single value on a second axis 302.

Each of the crosses 303 represents a training pair of the training database 107 defining a value of the first biological feature (so a position on the horizontal axis 301) and a value of the second biological feature (so a position on the vertical axis 302).

The classification model may be determined by clustering the training pairs of the training database, to obtain a plurality of clusters 304.1 to 304.3. It is to be noted that the classification model may identify at least one cluster.

To evaluate the similarity score, the verification module 103 may:
- obtain the first and second biological features at steps 203 and 204 as previously described;
- determine at step 205 the position of the pair formed by the first and second biological features, in the classification model 300. Two examples of positions 310 and 311 that are determined at step 205 are shown on figure 3;
- compare the position of the pair with the clusters to determine the similarity score at step 205. The similarity score may be higher when the pair is positioned inside a cluster or near to a cluster, than when it is outside and far from a cluster. In the example shown on figure 3, the similarity score of pair 310 is higher than the similarity score of pair 311, because pair 310 is closer to a cluster than pair 311.

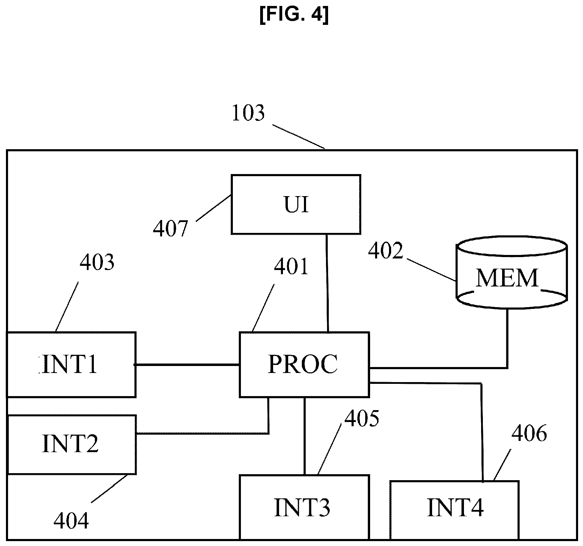

Figure 4 shows the structure of the validation module 103 according to some embodiments of the invention.

It is to be noted that the validation module 103 may integrate the authentication/enrollment module 104 previously described, and/or the first biometrical module 102.1 and the second biometrical module 102.2. Optionally, the validation module 103 may further integrate the at least one sensor of the system 100, such as the first biometrical sensor 101.1 and the second biometrical sensor 101.2 as previously described.

The validation module 103 comprises a processor 401 and a memory 402.

The processor 401 may comprise one or multiple microprocessors, a Central Processing Unit (CPU), on a single Integrated Circuit (IC) or several IC chips.

No restriction is attached to the memory 402, which may be any non-transient, tangible form of memory. For example, it can comprise ROM, EEPROM and/or flash memory. The processor 401 may be programmable and may be configured to execute instructions that are stored in its internal memory or to execute instructions that are stored in the memory 402.

The memory 402 can indeed store instructions for implementing steps 200 to 210 of the method described when referring to figure 2. According to the second embodiment, the memory 402 may store the classification model, which can be updated by obtaining updated version from the server 106.

Alternatively, the processor 401 may comprise fixed-functionality hardware logic or configurable logic, configured to implement steps 200 to 210 of the method described when referring to figure 2.

The validation module 103 may comprise a first interface 403, arranged for receiving:
- the first data from the first biometrical sensor 101.1 or from the first biometrical module 102.1; or
- the first biological feature directly from the first biometrical module 102.1.

The validation module 103 may comprise a second interface 404, arranged for receiving:
- the second data from the second biometrical sensor 101.2 or from the second biometrical module 102.2; or
- the second biological feature directly from the second biometrical module 102.2.

The validation module 103 further comprises (if it does not integrate the module 104) a third transmission interface 405 arranged for communicating with the enrollment/authentication module 104, in particular for performing steps 207 and 210 as previously described.

The validation module 103 may further comprise a fourth interface 406 for communicating with the training database 107 and/or with the sever 106 storing the classification model.

The validation module 103 may further comprise a user interface 407 for communicating with the individual, for example during initiation at step 200, and/or with a human supervisor, if any, in particular for receiving a manual refusal or validation at step 209 as previously described.

No restriction is attached to the communication links between the interfaces of the validation module 103 and the other components of the system 100, which may use any wired or wireless communication protocol. For example, wired protocols may include RS-232, RS-422, RS-485, I2C, SPI, IEEE 802.3 and TCP/IP. Wireless protocols may include IEEE 802.11a/b/g/n, Bluetooth, Bluetooth Low Energy (BLE), FeliCa, Zigbee, GSM, LTE, 3G, 4G, 5G, RFID and NFC. The interfaces 203 and 204 may comprise hardware (an Ethernet port, a wireless radio), software (drivers, firmware application) or a combination thereof to enable communications with the other components of the system 100.

## Claims

1. A method for enrollment or authentication of an individual (10) in a multi-modal biometrics system (100) comprising at least one biometrical sensor (101.1;101.2), the multi-modal biometrics system being configured to acquire first biometrical data representative of a first biometrical feature and second biometrical data representative of a second biometrical feature, via the at least one biometrical sensor, wherein the first biometrical feature and the second biometrical feature are different, the method comprising the following steps:
- obtaining (203) a first biological feature based on first data acquired by the biometrical sensor acquiring the first biometrical data;
- obtaining (204) a second biological feature based on second data acquired by the biometrical sensor acquiring the second biometrical data;
- determining (205) a similarity score of the first biological feature and the second biological feature;
- based on the similarity score, determining (206) whether the first biological feature and the second biological feature are from the same person or not.

2. The method according to claim 1, further comprising:
- acquiring (201) first biometrical data via one of the at least one biometrical sensor (101.1; 101.2);
- acquiring (202) second biometrical data via one of the at least one biometrical sensor;
- processing (207) the first biometrical data and the second biometrical data for enrollment or authentication of the individual, only if the first biological feature and the second biological feature are determined (206) as being from the same person.

3. The method according to claim 2, wherein the first data is the acquired first biometrical data and/or the second data is the acquired second biometrical data.

4. The method according to claim 3, wherein the first biological feature and the second biological feature are determined (206) as being from the same person if the similarity score is above a predefined threshold.

5. The method according to one of the preceding claims, wherein the multi-modal biometrics system (100) comprises a first biometrical sensor (101.1) arranged to acquire the first biometrical data and a second biometrical sensor (101.2) arranged to acquire the second biometrical data;
wherein the first biological feature is obtained (203) based on first data acquired by the first biometrical sensor and the second biological feature is obtained based on second data acquired by the second biometrical sensor.

6. The method according to one of the preceding claims, wherein the first biological feature and the second biological feature are of a same biological type, and wherein the similarity score is based on a comparison between the first biological feature and the second biological feature.

7. The method according to claim 6, wherein the first biological feature and the second biological feature are of a same physiological type and are one among the following:
- a body temperature or body temperature variation;
- a body movement feature;
- skin color;
- electrical activity;
- skin moisture;
- respiration rate.

8. The method according to claim 6 and to claim 3, wherein the first biological feature is a first estimation of an age or gender determined based on the first biometrical data and the second biological feature is a second estimation of an age or gender determined based on the second biometrical data.

9. The method according to one of claims 1 to 5, wherein the first biological feature is of a first biological type and the second biological feature is of a second biological type, the first biological type and the second biological type being different, and wherein the similarity score is determined (205) based on a classification model (300) arranged to receive as input an input first biological feature of the first biological type and an input second biological feature of the second biological type, and arranged to estimate the similarity score based on correlations between the input first biological feature and the input second biological feature.

10. The method according to claim 9, wherein the classification model (300) identifies one or several clusters (304.1-304.3) defining pairs (303) of first biological feature of the first biological type and second biological feature of the second biological type, wherein the classification model is obtained by unsupervised learning, by unsupervised learning or by semi-supervised learning, based on a training dataset comprising training pairs, each training pair comprising a training first biological feature of the first biological type and a training second biological feature of the second biological type, and wherein the similarity score is determined based on a distance between :
- a pair (310; 311) formed by the obtained first biological feature and the obtained second biological feature; and
- the one or several clusters of the classification model.

11. The method according to one of the preceding claims, wherein the first data is acquired by the multi-modal biometrics system (100) during a first period and the second data is acquired during a second period, wherein the first period and the second period are at least overlapping so that the first data and the second data are obtained in a synchronous way.

12. The method according to one claims 1 to 10, wherein the first data is acquired by the multi-modal biometrics system (100) during a first period and the second data is acquired during a second period, wherein the first period and the second period are distinct so that the first data and the second data are obtained in an asynchronous way.

13. A computer program comprising instructions arranged for implementing the method according to one of the preceding claims, when said instructions are executed by a processor (401).

14. A verification module (103) of a multi-modal biometrics system (100) comprising at least one biometrical sensor (101.1; 101.2) configured to acquire first biometrical data representative of a first biometrical feature and second biometrical data representative of a second biometrical feature, wherein the first biometrical feature and the second biometrical feature are different, the verification module comprising a processor (401) configured for:
- obtaining a first biological feature based on first data acquired by the biometrical sensor acquiring the first biometrical data;
- obtaining a second biological feature based on second data acquired by the biometrical sensor acquiring the second biometrical data;
- determining a similarity score of the first biological feature and the second biological feature;
- based on the similarity score, determining whether the first biological feature and the second biological feature are from the same person or not.

15. A multi-modal biometrics system (100) comprising a verification module (103) according to claim 15 and at least one biometrical sensor (101.1; 101.2), wherein the multi-modal biometrics system is configured to acquire first biometrical data representative of a first biometrical feature and second biometrical data representative of a second biometrical feature, via the at least one biometrical sensor, the first biometrical feature and the second biometrical feature being different.
